(19)

Europäisches Patentamt

European Patent Office

Office européen des brevets

(11) **EP 2 713 295 A1**

(12) **EUROPEAN PATENT APPLICATION**
published in accordance with Art. 153(4) EPC

(43) Date of publication:
**02.04.2014 Bulletin 2014/14**

(21) Application number: **12786295.1**

(22) Date of filing: **18.05.2012**

(51) Int Cl.:
*G06F 21/20* *(0000.00)*          *G06F 21/24* *(0000.00)*
*G09C 1/00* *(2006.01)*          *H04L 9/32* *(2006.01)*
*H04N 7/167* *(2011.01)*

(86) International application number:
**PCT/JP2012/062807**

(87) International publication number:
**WO 2012/157755 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2011   JP 2011112713**

(71) Applicant: **Nippon Hoso Kyokai**
**Tokyo 150-8001 (JP)**

(72) Inventors:
• **OHMATA Hisayuki**
**Tokyo 157-8510 (JP)**
• **MAJIMA Keigo**
**Tokyo 157-8510 (JP)**
• **INOUE Tomoyuki**
**Tokyo 157-8510 (JP)**
• **OGAWA Kazuto**
**Tokyo 157-8510 (JP)**

• **FUJII Arisa**
**Tokyo 157-8510 (JP)**
• **OTSUKI Kazuhiro**
**Tokyo 157-8510 (JP)**
• **OHTAKE Go**
**Tokyo 157-8510 (JP)**
• **KAWAKITA Hiroyuki**
**Tokyo 157-8510 (JP)**
• **YAMAMURA Chigusa**
**Tokyo 157-8510 (JP)**

(74) Representative: **Tomlinson, Kerry John**
**Dehns**
**St Bride's House**
**10 Salisbury Square**
**London**
**EC4Y 8JD (GB)**

(54) **COOPERATIVE BROADCAST COMMUNICATION RECEIVER DEVICE, RESOURCE ACCESS CONTROL PROGRAM AND COOPERATIVE BROADCAST COMMUNICATION SYSTEM**

(57)     The receiver (90) is provided with an application authentication unit (917) which uses a verification key to verify whether or not a signature of an application is valid and authenticates whether the acquired application is either an A-application or an ordinary application based on the validity of the signature; and a resource access controlling unit (918) performing a resource access control based on a resource access controlling table.

FIG. 7

**Description**

**CROSS REFERENCE TO RELATED APPLICATIONS**

The present patent-application relates to and asserts priority from Japanese patent application No. 2011-112713 filed on May 19, 2011, and incorporates the entirety of the contents and subject matter of all the above application herein by reference.

**BACKGROUND OF THE INVENTION**

[Field of the Invention]

The present invention relates to an art for resource access control of ordinary applications in an integrated broadcasting communications system using broadcasting and a communication network such as the Internet or a dedicated IP (the Internet Protocol) line.

[Description of Related Art]

Recently, various services (hereinafter, "integrated broadcasting communications service") provided by integrating broadcasting and communications has been studied accompanying with the digitalization of broadcasting and the faster and broader-bandwidth communications (refer to, for example, non-patent documents 1 and 2). In the integrated broadcasting communications service, it is assumed that a variety of information related to broadcast programs is acquired via a communication network and presented in combination with the broadcast. Further, a receiver is assumed to use applications adapted to the integrated broadcasting communications services, in order to utilize the integrated broadcasting communications services.

[Related Documents]

Non-patent documents:

    1. "Overview of Research of the Integrated Broadcasting and Communications Technology in NHK STRL", NHK STRL (*) R&D, No. 124, 2010-11, P4-P9
    2. "Technical Overview of Hybridcast (TM)", NHK STRL (*) R&D, No. 124, 2010-11, P10-P17
    *: STRL: Science & Technology Research Laboratories

**SUMMARY OF THE INVENTION**

[Problem to be solved]

In order to achieve the service more appealing to viewers, the integrated broadcasting communications service needs an environment which provides applications (A-applications) produced in compliance with certain rules by broadcasting stations, a variety of service providers, and individuals. Other applications (ordinary application), however, must not be allowed to freely access resources of the receiver provided by the integrated broadcasting communications services from the point of view of the security and a public nature of broadcasting, since such applications are not guaranteed to behave as expected in the integrated broadcasting communications services.
It is an object of the present invention to provide an integrated broadcasting communications receiver, a resource access control program, and an integrated broadcasting communications system that can properly authenticate the applications and prohibit the ordinary applications having no guarantees of operation from unlimited resource access in the integrated broadcasting communications services.

[Solution to the problem]

In order to solve the above-mentioned problems, the integrated broadcasting communications receiver according to a first invention of the present patent-application is provided in an integrated broadcasting communications system. The integrated broadcasting communications system includes a broadcast transmitting apparatus for transmitting a broadcast program; a signature key issuing device for issuing a signature key that is secret information and a verification key that is public information corresponding to the signature key; an application registration device for signing an application with the signature key; an application registration device for signing an application with the signature key; a repository for storing an A-application that is a signed application; and an application server for storing an ordinary application that is a non-signed application. And the integrated broadcasting communications receiver is provided with a verification key storing unit, an application obtaining unit, an application determination unit, and a resource access controlling unit.

According to the above configuration, the integrated broadcasting communications receiver stores a verification key in the verification key storing unit beforehand. In addition, the integrated broadcasting communications receiver acquires applications stored in either the repository or the application server via a network by the application obtaining unit. Thus, the application acquired by the application obtaining unit can be classified into either an ordinary application or an A-application according to whether the application has the signature added or not.

Here, "A (Authorized)-Application" is an application that is approved by a system administrator.

For example, the system administrator verifies manually or automatically whether or not the A-application performs an expected operation in the integrated broadcasting communications system, and approves the application that has no problems in the verification result as the A-application.

In addition, the "ordinary application" is an application that is not approved by the system administrator.

Further, the integrated broadcasting communications receiver makes the application determination unit use the verification key to verify whether a signature of an application that has been obtained by the application obtaining unit is valid or not. Thus, the integrated broadcasting communications receiver makes the application determination unit determine that the obtained application is the A-application if the signature of the obtained application is valid or that the obtained application is the ordinary application if the signature is not valid or not signed.

Further, the integrated broadcasting communications receiver makes the resource access controlling unit perform resource access control to prohibit an obtained application from accessing to a predetermined resource, based on the determination result by the application determination unit. For example, if the determination result asserts that the verified application is the ordinary application, the resource access controlling unit forbids the ordinary application to access a broadcasting resource described later. On the other hand, if the determination result asserts that the verified application is the A-application, the resource access controlling unit does not need to forbid the A-application to access the broadcasting resource. In the above way, the resource access controlling unit can forbid the ordinary application that is difficult to ensure safety to access to the resources without limitation.

Even for the ordinary applications, the resource access controlling unit may not forbid an access to some resources such as a receiver resource described later.

In addition, the integrated broadcasting communications receiver according to the second invention of the present patent-application further makes the application determination unit determine whether a signature of the application is valid or not, when the application is activated or obtained, in addition to the application determination unit of the integrated broadcasting communications receiver according to the first invention.

The above-mentioned configuration enables the integrated broadcasting communications receiver to reduce the number of verification of the signature in the case of verifying the signature of the application when the application is obtained. In contrast, the integrated broadcasting communications receiver may also verify the signature every time the application is activated.

In addition, in the integrated broadcasting communications receiver according to the third invention of the present patent-application, the resource access controlling unit further performs resource access control based on a resource access controlling table that determines in advance which resources can not be accessed by each of the A-application and the ordinary application, in addition to the integrated broadcasting communications receiver according to the first or second invention of the present patent-application.

This resource access controlling table is created, for example, by a broadcast station or the system administrator, sent via a broadcast wave or a network to the integrated broadcasting communications receiver and stored therein. That is, in the integrated broadcasting communications receiver, the broadcast station or the system administrator may manage the resource access controlling table.

Also, in view of the above-mentioned problems, the integrated broadcasting communications system according to the fourth invention of present patent-application includes the integrated broadcasting communications receiver, the broadcast transmitting apparatus, the signature key issuing device, an application registration device, the repository, and the application server according to the first invention of the present patent-application.

According to such a configuration, the integrated broadcasting communications system retrieves an application stored in either the repository or the application server through the integrated broadcasting communications receiver. Then, the integrated broadcasting communications system has the integrated broadcasting communications receiver determine whether the acquired application is the A-application or the ordinary application, and according to the determination result, performs a resource access control to inhibit an access to a predetermined resource. This enables the integrated broadcasting communications receiver to prohibit the ordinary application of which it would be difficult to ensure the safety from performing unlimited access to the resources.

The first invention of the present patent-application can be implemented by a resource access control program to make hardware resources of the integrated broadcasting communications receiver such as a CPU, memory, or a hard disk (including a verification key storing unit) cooperate as the above-mentioned application obtaining unit, application determination unit, or resource access controlling unit. This resource access control program may be delivered via a network, or by writing the program into a recording medium such as a CD-ROM or a flash memory.

[Effects of the Invention]

The invention of the present patent-application provides a superior effect as follows.

According to the first, the fourth, and the fifth invention of the present patent-application, in addition to the A-application, the ordinary applications that are produced by a variety of service providers or the like can be acquired, and at the same unlimited accesses to the resources by the ordinary applications that are difficult to ensure safety can be prevented. Thus, according to the first, fourth, and fifth invention of the present patent-application, since these ordinary applications can also be securely provided to viewers, high safety can be ensured while promoting entering of a wide range of service providers.

According to the second invention of the present patent-application, since a signature may be verified at a timing of either obtaining or activating the application, the integrated broadcasting communications receiver can be improved in the freedom of designing. Herein, according to the second invention of the present patent-application, in a case in which a signature is verified when obtaining an application, it is possible to reduce the number of signature verifications and the processing load on the integrated broadcasting communications receiver. In contrast, according to the second invention of the present patent-application, verifying the signature each time of activating an application enables to improve safety further.

According to the third invention of the present patent-application, the system administrator or the broadcast station can manage the resource access controlling table and maintainability of the integrated broadcasting communications receiver can be improved.

## BRIEF DESCRIPTION OF THE DRAWINGS

FIG. 1 is a schematic diagram showing the overall configuration of an integrated broadcasting communications system according to an exemplary embodiment of the present patent-application.

FIG. 2 is a block diagram showing a configuration of the application server in FIG. 1.

FIG. 3 is a block diagram showing the structure of the application ID generating device in FIG. 1.

FIG. 4 is a block diagram showing a configuration of the signature key issuing device in FIG. 1.

FIG. 5 is a block diagram showing a configuration of the applications registration device in FIG. 1.

FIG. 6 is a block diagram showing a configuration of the repository in FIG. 1.

FIG. 7 is a block diagram showing a configuration of the receiver in FIG. 1.

FIG. 8 is a diagram showing a data structure of the resource access controlling table that is set in advance in the receiver in FIG. 1.

FIG. 9 is a sequence diagram showing an operation to activate the A-application in the integrated broadcasting communications system in FIG. 1.

FIG. 10 is a sequence diagram showing an operation to activate the ordinary application in the integrated broadcasting communications system in FIG. 1.

FIG. 11 is a flowchart illustrating the application authentication process in FIG. 9 and FIG. 10.

## DETAILED DESCRIPTION OF THE INVENTION

[Outline of integrated broadcasting communications system]

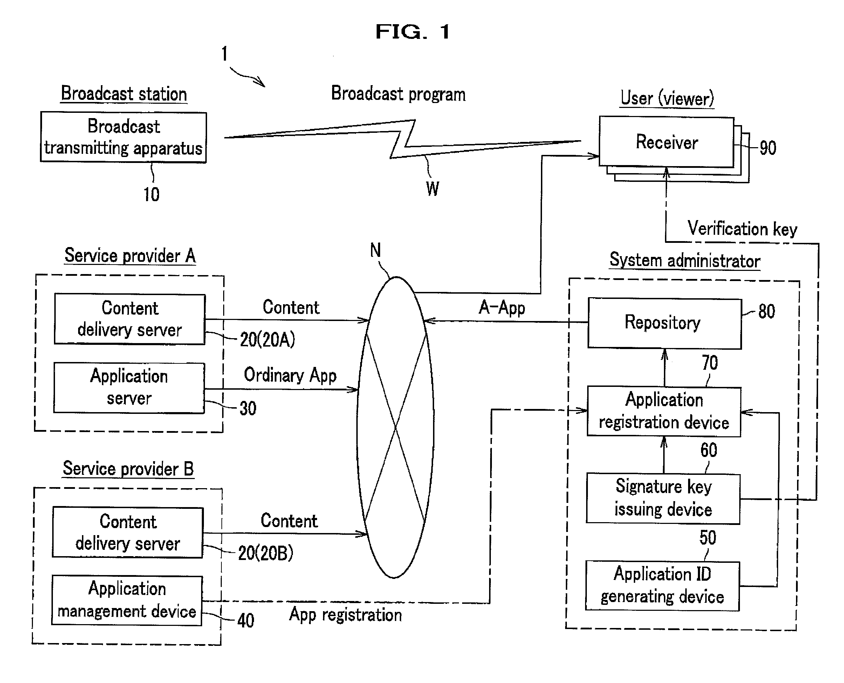

Referring to FIG. 1, a configuration of the integrated broadcasting communications system 1 according to an exemplary embodiment of the present patent-application is described.

The integrated broadcasting communications system 1 make broadcast and communications collaborate, and provides users (viewers) with various services together with a broadcast program. Specifically, the integrated broadcasting communications system 1 transmits applications adapted to various services to the integrated broadcasting communications receiver 90 (hereinafter, "receiver") via the network N, as well as transmits the broadcast program to the receiver 90 via a broadcast wave W. Additionally, the integrated broadcasting communications system 1 provides the user with a variety of services relating to the broadcast programs by the application in the receiver 90. At this time, the integrated broadcasting communications system 1 prohibit the ordinary application that is not authenticated by the system administrator from accessing to a predetermined resource in the receiver 90, in the viewpoint of safety (security) and public nature of the broadcasting.

"Application" is software available at the receiver 90 including software running on a browser of HTML (Hyper Text Markup Language) 5.

This application can be classified into the A-application or the ordinary application according to which the signature accompanies.

Note that the application is sometimes abbreviated as "APP" in the specifications and drawings.

An application approved by the system administrator is called "A-application." In the present exemplary embodiment, an application produced by service provider B is supposed to be "A-applications." The A-application is guaranteed the operation expected in the integrated broadcasting communications system 1. The A-application is provided with a signature and an application ID by an application registration device 70 mentioned later and then stored in the repository 80 described later.

On the other hand, an application that is not authorized by the system administrator is called "ordinary application." In the present exemplary embodiment, application service provider A is supposed to produce an "ordinary applications." The "ordinary application" is not guaranteed the expected operation in the integrated broadcasting communications system 1 and stored in an application server 30 described later in a state in which none of an application ID and a signature is added to the application.

The "broadcast station" sends a programmed content and broadcasts the broadcast program to a user (viewer) through a broadcast wave: W or a network: N.

The "service provider" provides services, and produces and delivers content and applications to provide the services.

The "system administrator" is an agency authenticating the A-application. For example, when the system administrator authenticates an application produced by a service provider as the A-application, the administrator verifies manually or automatically whether or not this application performs an operation expected in the integrated broadcasting communications system 1.

As shown in FIG. 1, the integrated broadcasting communications system 1 includes a broadcast transmitting apparatus 10, a content delivery server 20A and 20B, an application server 30, an application management device 40, an application ID generating device 50, a signature key issuing device 60, an application registration device 70, a repository 80, and a receiver 90.

In the integrated broadcasting communications system 1, the content delivery server 20A and 20B, the application server 30, the repository 80, and the receiver 90 are connected via the network N.

In the drawings hereinafter, the one-dotted chained line indicates a transmission in offline or online.

A broadcast transmitting apparatus 10 is installed in the broadcast station and a broadcasting facility for digital broadcasting including program organizing equipment, program transmission equipment, transmission equipment, and the like, which are not shown in the diagrams. The broadcast transmitting apparatus 10 transmits a broadcast program (a broadcasting signal) to the receiver 90 via the broadcast wave W, the network N, or a cable (not shown in the drawings).

The detailed description of the broadcast transmitting apparatus 10 is omitted since the apparatus 10 has a generally known configuration.

A content delivery server 20 provides the receiver 90 with content via the network N according to a request from an application in the receiver 90. As the content delivery server 20, there are exemplified a VOD (Video on Demand) delivery server, a caption delivery server, a multi-view delivery server and the like.

In the present exemplary embodiment, it is supposed that the content delivery server 20A is managed by the service provider A, and that the content delivery server 20B by the service provider B.

The detailed description of the content delivery server 20 is omitted since the server 20 has a generally known configuration.

An application server 30 is a server managed by the service provider A, and stores and manages an ordinary application. The application server 30 responses to a request from, for example, the receiver 90 and transmits an ordinary application to the receiver 90 via the network N.

An application management device 40 is managed by the service provider B, and stores and manages applications produced by the service provider B. Here, an application stored in the application management device 40 is transmitted to the application registration device 70, for example, via a network N. In another way, a media that stores the application may be sent to the system administrator in offline such as mail, and then the system administrator may manually input the application into the application registration device 70.

The detailed description of the application management device 40 is omitted since the device 40 has a generally known configuration.

An application ID generating device 50 generates an application ID to identify an application uniquely. The application ID generating device 50 outputs the generated application ID to the application registration device 70.

A signature key issuing device 60 issues a signature key (private key) for generating a signature indicating that an application is the A-application, and a verification key (public key) required for verifying the signature. The signature key generated by the signature key issuing device 60 is outputted to the application registration device 70. In addition, the verification key generated by the signature key issuing device 60 is delivered to the receiver 90 in an arbitral way. For example, the verification key is sent to the manufacturer of the receiver 90 and stored (pre-installed) in the receiver 90 in advance. In another way, an IC card that records the verification key may be sent to a user in offline, and each user may have the receiver 90 read the verification key stored in the IC card.

An application registration device 70 adds the signature and the application ID to an application from the application management device 40 and registers the application as the A-application. Here, the system administrator verifies manually or automatically whether or not the application, for example, from the service provider B performs an operation expected in the integrated broadcasting communications system. Then, an application with no problem in the verification result is approved as the A-application by the system administrator and registered in the application registration device 70. Then, the application registration device 70 generates a signature with the signature key from the signature key issuing device 60, adds to the application the generated signature and an application ID from the application ID generating device 50. Then, the application registration device 70 outputs to the repository 80 the A-application to which the signature and the application ID are added.

The repository 80 stores and manages the A-application. The repository 80 responds to, for example, a request from the receiver 9 and sends the receiver 90 the stored application A via the network N.

In this embodiment, the application ID generating device 50, the signature key issuing device 60, the application registration device 70 and the repository 80 are managed by the system administrator.

The receiver (integrated broadcasting communications receiver) 90 is installed in a home of each user or the like. The receiver 90 enables the user to watch broadcast programs by terrestrial digital broadcasting, BS digital broadcasting, data broadcasting, and the like, and is capable of receiving an A-application and an ordinary application through the network N. In addition, the receiver 90 authenticates (determines) either which an A-application or an ordinary application the acquired application is, using the above-mentioned verification key. Furthermore, the receiver 90 regulates to prohibit the acquired application from accessing some resources of the receiver 90, based on the authentication result (determination result).

Furthermore, the receiver 90 may control such as acquisition, activation, and termination of the application based on the application activation information.

The "application activation information" is information for identifying the application such as an application identifier (ID) or an application installation location, as well as auxiliary information (information corresponding to an application information table (AIT)) for controlling the acquisition, activation, and termination of the application, or the like.

[Configuration of application server]

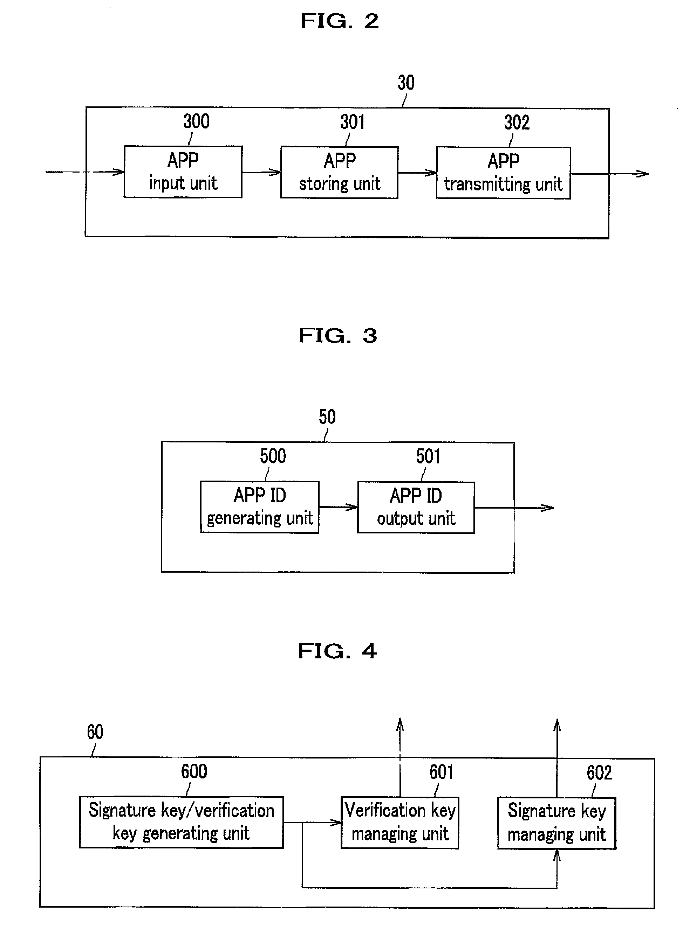

Referring to FIG. 2, a configuration of the application server 30 is described (see FIG. 1 as necessary).

As shown in FIG. 2, the application server 30 is provided with an application input unit 300, an application storing unit 301, and an application transmitting unit 302.

An application input unit 300 is a unit to which an ordinary application (an application managed service provider A) is inputted. The application input unit 300 writes the inputted ordinary application to the application storing unit 301.

An application storing unit 301 is a storage device such as memory, a hard disk for storing an ordinary application. Here, the location of an ordinary application in the application storing unit 301 is written in the application activation information.

An application transmitting unit 302 responds to a request from the receiver 90 to transmit an ordinary application to the receiver 90. Specifically, when the application transmitting unit 302 receives a request from the receiver 90 via the network N, the unit 302 retrieves an ordinary application matching this request from the application storing unit 301. Then, the application transmitting unit 302 transmits the retrieved ordinary application to the receiver 90 through the network N.

[Configuration of application ID generating device]

Referring to FIG. 3, a configuration of an application ID generating device 50 is described (see FIG. 1 as necessary).

As shown in FIG. 3, the application ID generating device 50 includes an application ID generating unit 500 and an application ID output unit 501.

The application ID generating unit 500 generates an application ID to identify an application uniquely. The application ID generating unit 500 generates an application ID, for example, according to a predefined naming rule. One example of the above naming rule creates an application ID by combining a number that identifies the organization producing the application and a number that is uniquely determined by this organization to identify the application. Then the Application ID generating unit 500 outputs the generated application ID to the application ID output unit 501.

The application ID output unit 501 outputs the application ID to the application registration device 70 just after the application ID generating unit 500 inputs the application ID.

The application ID generating device 50 generates an application ID at the arbitrary timing. For example, when determining an application from the application service provider B as the A-application, the system administrator manually enters an application ID generating instruction into the application ID generating device 50. Then, depending on the application ID generating instruction, the application ID generating device 50 generates an application ID.

[Configuration of the signature key issuing device]

Referring to FIG. 4, a configuration of the signature key issuing device 60 is described (see FIG. 1 as necessary).

As shown in FIG. 4, the signature key issuing device 60 includes a signature key/verification key generating unit 600, a verification key managing unit 601, and a signature key managing unit 602.

The signature key/verification key generating unit 600 generates a signature key and a verification key. Here, the signature key/verification key generating unit 600 generates a signature key and a verification key common to the integrated broadcasting communications system 1 by a general public key cryptography, for example, RSA, ElGamal, Rabin, and Elliptic Curve Cryptography (ECC). Then, the signature key/verification key generating unit 600 outputs the generated verification key to the verification key managing unit 601, and the generated signature key to the signature key managing unit 602.

The verification key managing unit 601 stores and manages the verification key generated by the signature key/verification key generating unit 600. For example, the verification key managing unit 601 stores the verification key inputted by the signature key/verification key generating unit 600 into storage such as memory or a hard disk (not shown). Then, the verification key managing unit 601 outputs the verification key stored. The verification key outputted by the verification key managing unit 601 is pre-installed in the receiver 90, or delivered to the receiver 90 by way of such as sending in offline an IC card storing the verification key.

Since it is not necessary to continue to store and manage the verification key after delivering it to the receiver 90, the verification key may be deleted from the verification key managing unit 601.

The signature key managing unit 602 stores and manages the signature key generated by the signature key/verification key generating unit 600. For example, the signature key managing unit 602 stores the signature key that the signature key/verification key generating unit 600 inputs into storage such as memory or a hard disk (not shown). Then, the signature key managing unit 602 outputs the stored signature key to the application registration device 70.

The signature key issuing device 60 may generate a signature key and a verification key by the time when the registration of an A-application starts. For example, the system administrator enters manually a key generation order into the signature key issuing device 60 when introducing or initializing the integrated broadcasting communications system 1. Then, the signature key issuing device 60 generates and outputs a signature key and a verification key, according to a key generation order inputted.

[Configuration of the application registration device]

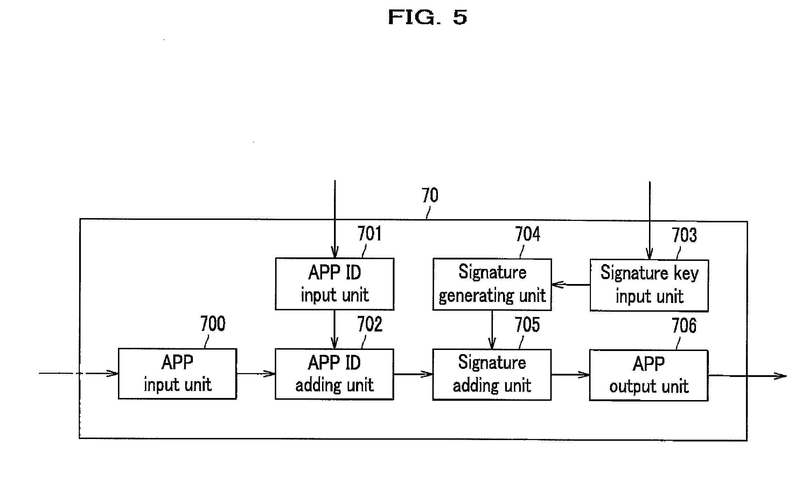

Referring to FIG. 5, a configuration of the application registration device 70 is described (see FIG. 1 as necessary).

As shown in FIG. 5, the application registration device 70 includes an application input unit 700, an application ID input unit 701, an application ID adding unit 702, a signature key input unit 703, a signature generating unit 704, a signature adding unit 705, and an application output unit 706.

The application input unit 700 is a unit which an application authenticated by the system administrator is inputted. Then, the application input unit 700 outputs an inputted application to the application ID adding unit 702.

The application ID input unit 701 is a unit to which the application ID generating device 50 inputs an application ID. Then, the application ID input unit 701 outputs the application ID adding unit 702 the inputted application ID.

The application ID adding unit 702 adds an application ID inputted by the application ID input unit 701 to the application inputted by the application input unit 700. Then, the application ID adding unit 702 outputs the application provided with the application ID to the signature adding unit 705.

The signature key input unit 703 is a unit to which the signature key issuing device 60 inputs the signature key (secret key). Then the signature key input unit 703 outputs the entered signature key to the signature generating unit 704.

The signature generating unit 704 generates a signature using the signature key inputted by the signature key input unit 703. A signature source message is a source message to generate a signature and made from, for example, a combination of one or more of identification information such as a provider ID that uniquely identifies the service provider, the application ID, a random number, and a binary code of the application itself. Then the signature generating unit 704 calculates a hash value of the signature source message by applying to the message a hash function, (for example, SHA (Secure Hash Algorithm), MD (Message Digest Algorithm)). Moreover, the signature generating unit 704 generates a signature by encrypting the calculated hash value with the signature key and outputs the signature to the signature adding unit 705.

Specifically, the signature generating unit 704 generates the signature represented by the following equation (1). In this equation (1), Sig means a signature; ENC_Ks, an encryption with a signature key (secret key); Hash, a hash function; Mes, a signature source message.

$$\mathrm{Sig = ENC\_Ks\ (Hash\ (Mes))\ \text{---}\ (1)}$$

Note that the signature source message mentioned above needs to be delivered to the receiver 90 by some means. For example, the signature source message may be delivered to the receiver 90 by adding this message to the application and delivering the message together with the application. Alternatively, the signature source message may be delivered in the same manner as the verification key.

Thereafter, description is proceeded supposed that the signer signature is added to the application.

The signature adding unit 705 adds the signature inputted by the signature generating unit 704 to the application inputted by the application ID adding unit 702. Then the signature adding unit 705 outputs the application to which the application ID and the signature are added, to the application output unit 706.

The application output unit 706 outputs the application to the repository 80 immediately after the signature adding unit 705 inputs the application. That is, the application output unit 706 outputs to the repository 80 as an A-application, the application to which the application ID and the signature are added.

[Configuration of the repository]

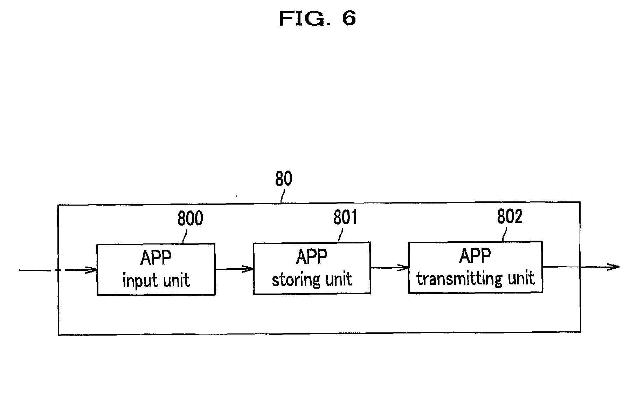

With reference to FIG. 6, a configuration of the repository 80 is described (see FIG. 1 as necessary).

As shown in FIG. 6, the repository 80 includes an application input unit (APP input unit) 800, an application storing unit (APP storing unit) 801, and an application transmitting unit (APP transmitting unit) 802.

The application input unit 800 is inputted the A-application by the application registration device 70. The application input unit 800 writes the inputted A-application into the application storing unit 801.

The application storing unit 801 is a storage device such as memory or a hard disk for storing the A-application. For example, the store location of the application A in the application storing unit 801 is written in the application activation information.

The application transmitting unit 802 transmits the A-application to the receiver 90 according to a request from the receiver 90. Specifically, when the application transmitting unit 802 receives a request from the receiver 90 via the network N, the unit 802 retrieves the A-application that satisfies the request from the application storing unit 801. Then, the application transmitting unit 802 transmits the retrieved A-application to the receiver 90 through the network N.

[Configuration of the receiver]

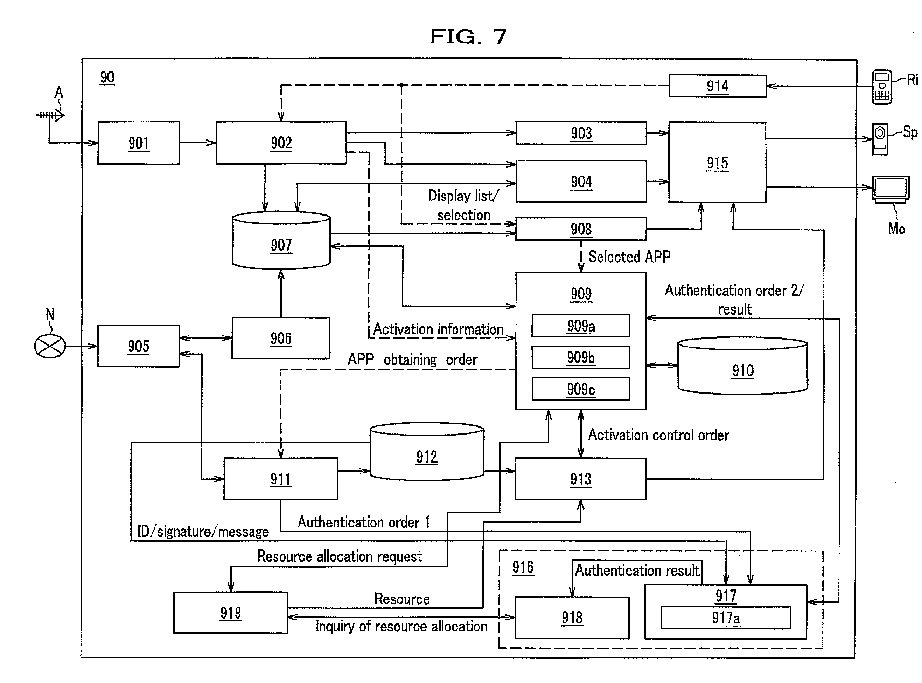

Referring to FIG. 7, a configuration of the receiver 90 is described (see FIG. 1 as necessary).

As shown in FIG. 7, the receiver 90 includes a broadcast receiving unit 901, a broadcast signal analysis unit 902, a video/audio decoding unit 903, a data broadcast decoding unit 904, a communication transmitting/receiving unit 905, an application activation information obtaining unit 906, an application activation information storing unit 907, a list controlling unit 908, an application management/execution controlling unit 909, an activated application identification information storing unit 910, an application obtaining unit 911, an application storing unit 912, an application execution unit 913, an operation controlling unit 914, a composing and displaying unit 915, a security managing unit 916, and a resource managing unit 919.

The broadcast receiving unit 901 receives a broadcast program (broadcasting signal) via an antenna A, a network N, or a cable (not shown); performs demodulation, error correction, and decoding; and outputs the broadcast program (broadcasting signal) to the broadcast signal analysis unit 902 as a MPEG2 transport stream (TS).

The broadcast signal analysis unit 902 analyzes PSI/SI (Program Specific Information / Service Information) in the stream data (TS) which is demodulated by the broadcast receiving unit 901, and extracts data such as video, audio, and data broadcasting corresponding to a programmed channel that is currently selected. The channel selection is performed based on a channel switching instruction sent from the operation controlling unit 914 described later.

The broadcast signal analysis unit 902 outputs the extracted data in PES format (Packetized Elementary Stream) such as video or audio data, to the video/audio decoding unit 903; the extracted data in section format such as data broadcast, to the data broadcast decoding unit 904.

At this time, the broadcast signal analysis unit 902 may extract the application activation information included in an AIT descriptor (application activation information descriptor) which is one of SI (program arrangement information) from the stream data demodulated by the broadcast receiving unit 901. Then, the broadcast signal analysis unit 902 writes the extracted application activation information into the application activation information storing unit 907. In addition, when extracting the application activation information, the broadcast signal analysis unit 902 notifies to the application management/execution controlling unit 909 that the application activation information is notified (activation information notification), together with information identifying the application (application ID).

The video/audio decoding unit 903 decodes video and audio (video and audio stream of MPEG2) extracted by the broadcast signal analysis unit 902, and outputs the decoded data of video and audio to the composing and displaying unit 915.

The data broadcast decoding unit 904 decodes data of the data broadcast extracted by the broadcast signal analysis unit 902, analyzes BML, converts the BML into display data, and outputs the display data to the composing and displaying unit 915.

In addition, the data broadcast decoding unit 904 extracts the application activation information transmitted in a carousel, writes the extracted application activation information into the application activation information storing unit 907.

The communication transmitting/receiving unit 905 receives data such as an application and application activation information via the network N.

The application activation information obtaining unit 906 obtains the activation information corresponding to the A-application and the ordinary application via the communication transmitting/receiving unit 905. Then, the application activation information obtaining unit 906 writes the acquired application activation information into the application activation information storing unit 907.

The application activation information storing unit 907 is a storage medium such as memory or a hard disk for storing the application activation information. In the application activation information storing unit 907, the broadcast signal analysis unit 902 or the application activation information obtaining unit 906 writes the application activation information.

The list controlling unit 908 is a launcher that controls display of a list of activatable applications and selection of an application.

The list controlling unit 908, receiving a user's order to display a list through the operation controlling unit 91, generates a list of applications corresponding to the application activation information stored in the application activation information storing unit 907, and outputs the list to the composing and displaying unit 915 as display data.

Further, the list controlling unit 908 selects an application from the list of applications that the user displays via the operation controlling unit 914. Then, the list controlling unit 908 outputs a selected application notification that includes the number (application ID) identifying the selected application, to the application management/execution controlling unit 909.

The application management/execution controlling unit 909 controls an application life cycle (a process in which an application is loaded, executed, and terminated).

Specifically, the application management/execution controlling unit 909, when the application execution unit 913 inputs a resource allocation request described later, outputs (transfers) the resource allocation request to the resource managing unit 919 described later.

Further, the application management/execution controlling unit 909, when the resource managing unit 919 inputs a response to the resource allocation request, outputs (transfers) the response of the resource allocation request to the application execution unit 913.

In the case of successful allocation of the resource in which the response to the resource allocation request indicates that the resource allocation is successful, the application management/execution controlling unit 909 writes the information of the successful allocation of the resource into a security information table (not shown) stored in memory or the like in association with the ID of the running application.

On the other hand, in the case of unsuccessful allocation of the resource in which the response to the resource allocation request indicates that the resource allocation is unsuccessful, the application management/execution controlling unit 909 writes the information of the unsuccessful allocation of the resource into the security information table in association with the application ID of the running application.

In addition, the application authentication unit 917 described later inputs the authentication result to the application management/execution controlling unit 909. The authentication result includes information such as the ID of the application whose signature is verified, and an attribute indicating to which of an ordinary application or an A-application the application belongs. Then, the application management/execution controlling unit 909 writes the inputted authentication result into the security information table in association with the application ID of the running application.

Thereby, the application management/execution controlling unit 909 is able to store and manage the success or failure of resource allocation, the allocated resource, and the authentication result for the running application.

Here, the application management/execution controlling unit 909 is provided with an activation controlling unit 909a, a termination controlling unit 909b, and a reservation managing unit 909c.

The activation controlling unit 909a controls activation of the application acquired by the application obtaining unit 911.

Specifically, the activation controlling unit 909a activates an application according to the application activation information stored in the application activation information storing unit 907, when receiving a notification of the activation information from the broadcast signal analysis unit 902.

The activation controlling unit 909a, also, notifies the application execution unit 913 to run an application (activation control order), when a notification of a selected application is notified by the list controlling unit 908. Thereby, the application selected from the list by the user is activated.

In addition, the activation controlling unit 909a is supposed to manage a running application with identification information (the application ID) and to write the application ID of the running application into the activated application identification information storing unit 910.

The termination controlling unit 909b performs termination control of the running applications.

Specifically, the termination controlling unit 909b, when receiving the notification of the activation information from the broadcast signal analysis unit 902, orders the application execution unit 913 to terminate the applications, according to the application activation information stored in the application activation information storing unit 907.

The reservation managing unit 909c controls reservation (install) of applications in advance in the receiver 90 (specifically, the application storing unit 912).

More specifically, the reservation managing unit 909c, when receiving a notification of the selected application from the list controlling unit 908, notifies the application obtaining unit 911 of an application obtaining order. The application obtaining order is an instruction to obtain the application according to the application activation information, and to write the application into the application storing unit 912.

Thus, the application selected by the user is reserved in the application storing unit 912.

Here, when an application is stored (installed) in the application storing unit 912, the reservation managing unit 909c sets an application reservation state as "reserved" in the application activation information storing unit 907.

In the other aspect, the reservation managing unit 909c deletes the reserved application in accordance with an instruction from the user. At this time, the reservation managing unit 909c sets "unreserved" the application reservation state of the deleted application in the application activation information storing unit 907.

The activated application identification information storing unit 910 is a storing medium such as a semiconductor memory for storing identification information (application ID) of the running application. In the activated application identification information storing unit 910, the activation controlling unit 909a writes an application ID when activating the application and the termination controlling unit 909b deletes the application ID when terminating the application.

The application obtaining unit 911, when the reservation managing unit 909c notifies an application obtaining order, acquires an application stored in either the repository 80 or the application server 30 via the communication transmitting/receiving unit 905. The application obtaining unit 911 writes the acquired application into the application storing unit 912.

Then, the application obtaining unit 911, when obtaining the application, outputs an authentication order to the application authentication unit 917. This authentication order is an order to authenticate (determine) which one of the A-application or the orderly application the application is.

This enables to reduce the number of times for the receiver 90 to perform the application authentication, compared with the case of performing the application authentication each time to activate the application, and to reduce the processing load.

In FIG. 7, the authentication order outputted by the application obtaining unit 911 is described as "Authentication order 1". The "authentication order 2" is described later.

The application storing unit 912 is storage medium such as a hard disk and stores the application acquired by the application obtaining unit 911. The application execution unit 913 retrieves and executes the application stored in the application storing unit 912.

The application execution unit 913 performs activation and termination of an application based on an activation control order from the application management/execution controlling unit 909.

The application execution unit 913, based on the information identifying the application (the application ID, the storing location, and the like) included in the activation control order, acquires the application and data required for executing the application (for example, metadata, icon data, etc) from the origin of the application. Then, the application execution unit 913 develops (loads) the application in a memory (not shown) to run the application.

Video and audio data accompanying the execution of this application is outputted to the composing and displaying unit 915.

Here, if a running application calls an API (Application Program Interface) to access a resource, the application execution unit 913 outputs a resource allocation request to the resource managing unit 919 through the application management/execution controlling unit 909.

This resource allocation request is intended to request an allocation of resource and includes, for example, an API name called by the running application.

In addition, the application execution unit 913 is inputted a response to the resource allocation request by the resource managing unit 919.

In the case that the response to the resource allocation request indicates a successful resource allocation, the application execution unit 913 calls an API to use the resource allocated by the resource managing unit 919.

On the other hand, in the case of resource allocation failure in the response to the resource allocation request, the application execution unit 913 performs a handling optional to each application, for example, a security-related exception handling, or termination of the application.

In addition, if the termination controlling unit 909b directs termination of the application, the application execution unit 913 terminates the running application, for example, with an interruption signal, or the like.

It is described that the application execution unit 913 outputs the resource allocation request to the resource managing unit 919 through the application management/execution controlling unit 909, but the application execution unit 913 is not limited thereto. Specifically, the application execution unit 913 may output the resource allocation request directly to the resource managing unit 919 (not shown in figure).

The operation controlling unit 914 notifies the broadcast signal analysis unit 902 of a channel switching order including the channel number after the switching, when a user instructs to change the channel via a remote control device Ri. Thereby, the ordered channel is now selected.

The composing and displaying unit 915 synthesizes and displays video and audio data from the video/audio decoding unit 903, display data of the data broadcast from the data broadcast decoding unit 904, list display data from the list controlling unit 908, and application display data from the application execution unit 913.

Note that the composing and displaying unit 915 outputs the synthesized audio as an audio signal to the audio output device Sp such as a speaker or the like connected to the outside, the synthesized image (video) as a video signal to the video display device Mo such as a liquid crystal display connected to the outside as a video signal.

The security managing unit 916 manages the security of the receiver 90, and includes an application authentication unit (application determination unit) 917 and a resource access controlling unit 918.

The application authentication unit (application determination unit) 917 is provided with a verification key managing unit (verification key storing unit) 917a for storing and managing a verification key. The application authentication unit 917 verifies whether the signature of the application acquired by the application obtaining unit 911 is valid or not, by using the verification key. Then, the application authentication unit 917 authenticates an acquired application as an A-application when the signature is valid; authenticate the acquired application as an ordinary application when the signature is not valid (application authentication).

<Specific examples of the application authentication>

Hereafter, a specific example of application authentication is explained.

The application authentication unit 917 reads out an application ID (ID in FIG. 7) added to an application, and a signature and a signature source message (message in FIG. 7) from the application storing unit 912 in response to the authentication order inputted by the application obtaining unit 911. Then the application authentication unit 917 verifies whether the signature added to the application is valid or not using the verification key stored in the verification key managing unit 917a.

Specifically, the application authentication unit 917 applies a hash function to a signature source message to calculate a hash value of the signature source message. The hash function is the same as that of the signature generating unit 704. The application authentication unit 917 decrypts the signature added to the application with the verification key. Furthermore, the application authentication unit 917 compares the decrypted signature with a hash value of the signature source message to determine whether they match or not.

Specifically, the application authentication unit 917 verifies the signature using the following equation (2). In the Equation (2), DEC_Kp indicates the decryption with the verification key (public key), '<=>' indicates a comparison of the left and right sides.

$$\mathrm{DEC\_Kp\,(Sig) <=> Hash\,(Mes) \;\text{---}\; equation\,(2)}$$

Here, when the decrypted signature matches the hash value of the signature source message, the application authentication unit 917 determines the decrypted signature is valid and authenticates the acquired application as the A-application.

On the other hand, if the signature is not added to the application, or if the decoded signature does not match the hash value of the signature source message, the application authentication unit 917 determines the signature is not valid, and authenticates the acquired application as ordinary application.

Then, the application authentication unit 917 outputs, as an authentication result (determination result), the ID of the application with the verified signature and information such as an attribute indicating the A-application or the ordinary application (for example, 0: A-application, 1: ordinary application) to the application management/execution controlling unit 909 and the resource access controlling unit 918.

The resource access controlling unit 918 controls a resource access of the application obtained by the application obtaining unit 911 depending on the attribute of this application. In the present exemplary embodiment, the resource access controlling unit 918 performs the resource access control based on a resource access controlling table that is set in advance.

<Resource Access Control>

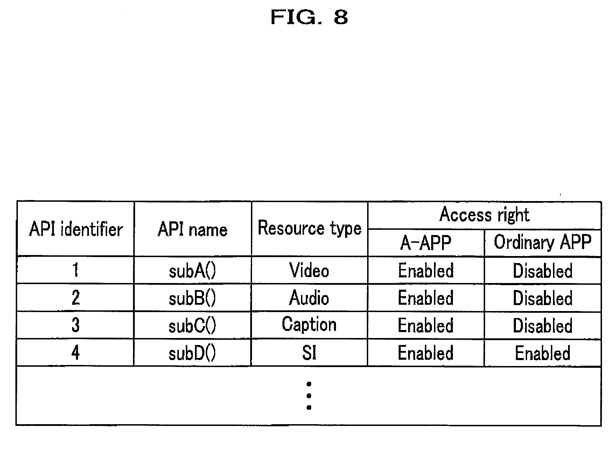

Referring to FIG. 8, the resource access control by the resource access control unit 918 is described in detail (refer to FIG. 7 as necessary).

The resource access controlling table is a table that defines resources accessible and inaccessible from each of the A-application and the ordinary application in advance. As shown in FIG. 8, the resource access controlling table includes data items of API identifier, API name, Resource type, and Access right.

The API identifier is an identifier that uniquely identifies an API that accesses a resource.

The API name is a name of the API that accesses the resource.

The Resource type is information indicating the resource accessed by the API.

The access right indicates whether or not each of an A-application and an ordinary application can access to a resource.

This resource is a content element or a receiver resource that is required for an operation of an application, and includes, for example, a broadcast resource, a communication resource, and a receiver resource.

The broadcast resource is a resource handled in a broadcast wave W, includes, for example, video, audio, caption, and PSI (Program Specific Information) / SI (Service Information).

The communication resource is a resource handled in the network N, and includes, for example, TCP (Transmission Control Protocol) and UDP (User Datagram Protocol).

In addition, the receiver resource is a resource of software and hardware of the receiver 90, and includes, for example, a video/audio output process, a channel selection process, memory, and storage.

The resource access controlling table in FIG. 8 defines an API for exclusively accessing to each resource. In the example in FIG. 8, an API accessing to the resource "Video" is "subA()", an API accessing to the resource "Audio" is "subB()", an API accessing to the resource "Caption" is "subC()", an API accessing to the resource "SI" is "subD()."

The resource access controlling table indicates that the access rights of the A-application to all the resources of "Video", "Audio", "Caption", and "SI" are "Enabled" and that the A-application can access all the resources.

Further, the resource access controlling table indicates that the access rights of the ordinary application to the broadcast resources such as "Video", "Audio", "Caption" are "Disabled" and that the ordinary application can not access these resources. Meanwhile, the resource access controlling table indicates that even the ordinary application can access the resource "SI."

That is, the resource access controlling table in FIG. 8 is configured so that the A-applications can access the wider range of resources compared to the ordinary applications. In other words, the resource access controlling table is configured to prevent the ordinary applications from accessing to the predetermined resources, in view of safety and a public nature of broadcasting.

Here, the resource access controlling table may be created by an authority such as the system administrator or the broadcast station, transmitted to the receiver 90 via the broadcast wave W or the network N, and stored in the receiver 90. This enables the system administrator or the broadcast station to manage the resources accessible from the ordinary application in the receiver 90 and to improve maintainability.

Note that the resource access controlling table is not limited to the example in FIG. 8. For example, in the resource access controlling table, resources (for example, communication resources such as the "TCP") other than the broadcasting resources can also be configured.

The application authentication unit 917 inputs an authentication result to the resource access controlling unit 918. Then, based on the authentication result, the resource access controlling unit 918 determines whether the resource allocation is permitted or not when a resource allocability query is inputted by the resource managing unit 919.

Specifically, when the authentication result indicates that an application is the A-application, the resource access controlling unit 918 searches the resource access controlling table for the access right of the A-application using the API name included in the resource allocability query as the search key and determines the allocability of the resource.

For example, when the A-application calls "subA ()", the resource access controlling unit 918 determines that the resource can be allocated because the access right for the resource "Video" is "Enabled." Then the resource access controlling unit 918 outputs a resource allocatable response indicating the resource allocation is allowable to the resource managing unit 919.

When the access right of the A-application is "Disabled", the resource access controlling unit 918 prohibits even the A-application from accessing to the resource (not shown in FIG. 8).

On the other hand, when the authentication result indicates that an application is the ordinary application, the resource access controlling unit 918 searches the resource access controlling table for the access right of the ordinary application using the API name included in the resource allocability query as the search key, and determines the allocability of the resource. For example, when the ordinary application calls "subA ()", the resource access controlling unit 918 determines that the resource allocation is not permitted because the access right for the resource "Video" is "Disabled." When the ordinary application calls "subD ()", the resource access controlling unit 918 determines that the resource allocation is permitted because the access right for the resource "SI" is "Enabled." Then, the resource access controlling unit 918 outputs a resource unallocatable response indicating the resource cannot be allocated or the resource allocatable response based on the determination result to the resource managing unit 919.

Returning to FIG. 7, the description of the configuration of the receiver 90 is resumed.

The resource management unit 919 manages the various resources. Here, when the application management/execution controlling unit 909 input the resource allocation request, the resource managing unit 919 outputs the resource allocability query to the resource access controlling unit 918, according to the resource allocation request.

The resource allocability query is intended to inquire of the resource access controlling unit 918 whether or not the resource can be allocated, and includes, for example, the API name contained in the resource allocation request.

In addition, the resource managing unit 919 is inputted a response to the resource allocability query by the resource access controlling unit 918.

Then, the resource managing unit 919 allocates the resource to the running application when this response to the resource allocability query indicates that the resource is allocatable. Then, the resource managing unit 919 outputs the resource allocation success response indicating that the resource allocation is successful to the application management/execution controlling unit 909.

On the other hand, if the response to the resource allocability query indicates that the resource is unallocatable, the resource managing unit 919 outputs to the application management/execution controlling unit 909 the resource allocation failure response indicating that the allocation of the resource unsuccessful.

[Operation of integrated broadcasting communications system: A-application]

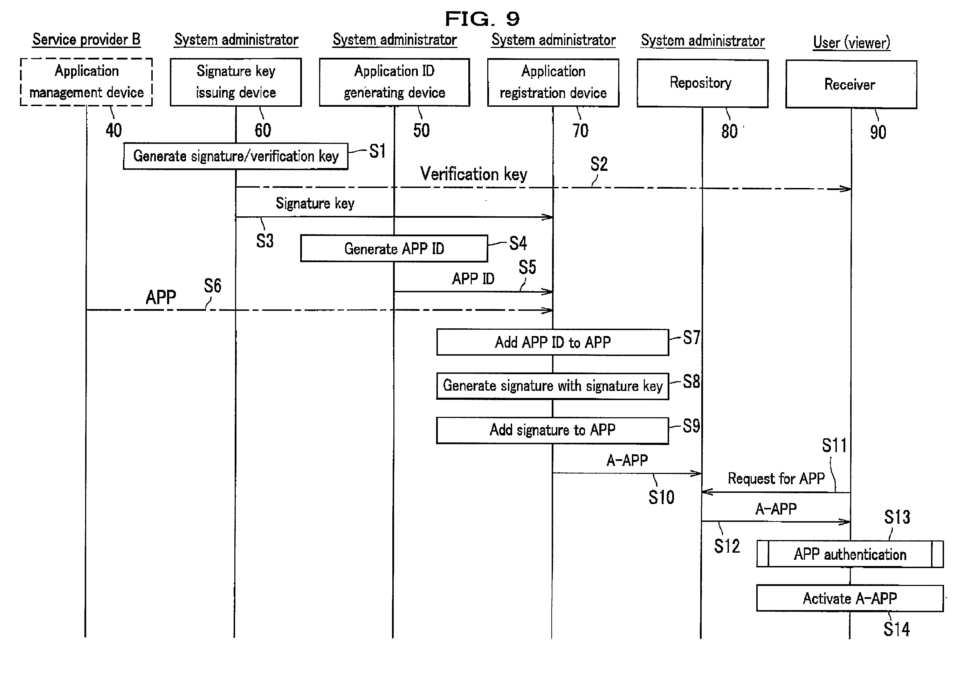

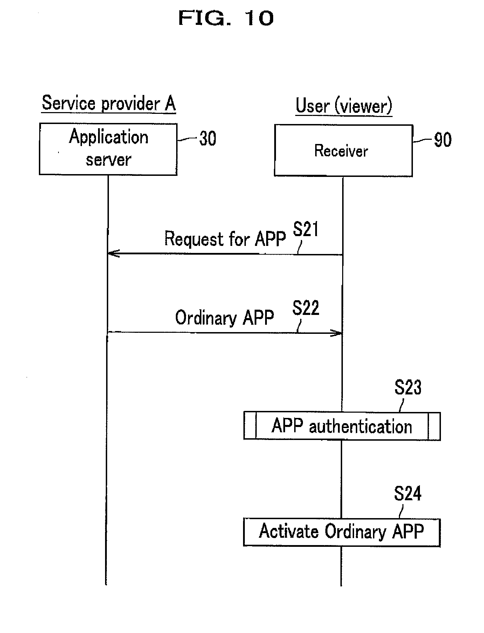

An operation of the integrated broadcasting communications system in FIG. 1 is described in the case that the receiver 90 activates the A-application (FIG. 9) and the case that the receiver 90 activates the ordinary application (FIG. 10).

As shown in FIG. 9, the integrated broadcasting communications system 1 has the signature key issuing device 60 issue a signature key (secret key) and a verification key (public key) corresponding to the signature key. Here, the signature key issuing device 60 generates the signature key and the verification key using a typical public key encryption scheme, for example, RSA, ElGamal, Rabin, and the elliptic curve cryptography (step S1).

The integrated broadcasting communications system 1 delivers the verification key generated by the signature key issuing device 60 to the receiver 90 by an arbitrary way. For example, the verification key is sent to the manufacturer of the receiver 90 and recorded (pre-installed) in the receiver 90 in advance. In another way, the IC card that records the verification key may be sent to a user in offline and each user may have the receiver 90 read the verification key stored in the IC card (step S2).

The integrated broadcasting communications system 1 outputs the generated signature key to the application registration device 70 through the signature key issuing device 60. For example, the signature key issuing device 60 outputs (issues) the signature key to the application registration device 70 in response to an order from a system administrator (step S3).

Note that the process of steps S1 to S3 may be executed only one time before a registration of the A-application starts and does not need to be executed each time an A-application is registered.

The integrated broadcasting communications system 1 has the application ID generating device 50 generate an application ID (step S4). Then, the integrated broadcasting communications system 1 outputs the application registration device 70 the application ID generated by the application ID generating device 50 (step S5).

The integrated broadcasting communications system 1 outputs the application stored in the application management device 40 to the application registration device 70 in arbitrary way. For example, the application is sent to the application registration device 70 via the network N. In another way, a recording medium storing this application may be sent to the system administrator in offline, and the system administrator manually input this application into the application registration device 70 (step S6).

The integrated broadcasting communications system 1 has the application registration device 70 add the application ID inputted by the application ID generating device 50 to the application inputted by the application management device 40 (step S7).

The integrated broadcasting communications system 1 has the application registration device 70 generate a signature, using the signature key inputted by the signature key issuing device 60. For example, the application registration device 70 calculates the hash value of the signature source message by applying a hash function on the signature source message. Then, the application registration device 70 generates a signature by encrypting the calculated hash value with the signature key (step S8).

The integrated broadcasting communications system 1 has the application registration device 70 add the generated signature to the application with the application ID (step S9). Then, the integrated broadcasting communications system 1 sends the application to which the signature is added to the repository 80 through the application registration device 70, and has the repository 80 store and manage the A-application (step S10).

The integrated broadcasting communications system 1 has the receiver 90 request an A-application from the repository 80 (step S11). Then, the integrated broadcasting communications system 1 has the receiver 90 acquire the requested A-application from the repository 80 (step S12).

The integrated broadcasting communications system 1 has the receiver 90 perform an application authentication (step S 13). The details of the application authentication in step S 13 is described later.

Here, since the signature of the application is valid, the integrated broadcasting communications system 1 has the receiver 90 activate the acquired application as an A-application (step S 14).

[Operation of integrated broadcasting communications system: ordinary application]

As shown in FIG. 10, the integrated broadcasting communications system 1 requires an ordinary application from the application server 30 (step S21). Then, the integrated broadcasting communications system 1 has the receiver 90 acquire the required ordinary application from the application server 30 (step S22).

The integrated broadcasting communications system 1 has the receiver 90 perform the application authentication (step S23). Here, since the application signature is not valid, the integrated broadcasting communications system 1 has the receiver 90 activate the acquired application as the ordinary application (step S24).

Note that the processing of the step S23 is the same process as step S 13 in FIG. 9.

[Operation of the receiver: application authentication]

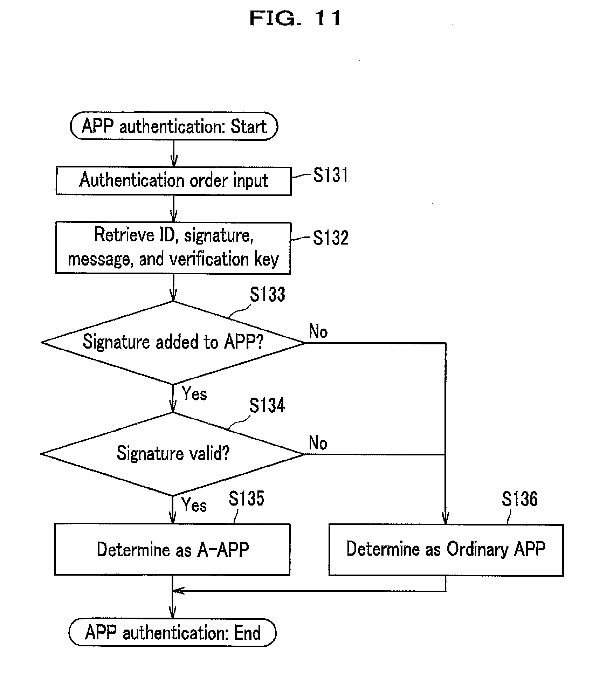

With reference to FIG. 11, the application authentication process is described as an operation of the receiver 90 (refer to FIG. 7 as necessary).

When the application is acquired, the application obtaining unit 911 inputs the application authentication unit 917 the authentication order (step S131). Then, the application authentication unit 917 retrieves the application ID, the signature, and the signature source message attached to the application from the application storing unit 912, and at the same time, reads out the verification key from the verification key managing unit 917a (step S132).

The application authentication unit 917 determines whether or not the signature is attached to the application (step S133).

If the signature is added to the application ("Yes" in step S 133), the application authentication unit 917 proceeds to step S 134.

On the other hand, if the signature is not added to the application ("No" in step S 133), the application authentication unit 917 goes to step S 136.

The application authentication unit 917 verifies whether the signature is valid or not with the verification key (step S 134).

If the signature is valid ("Yes" in step S134), the application authentication unit 917 proceeds to step S135.

If the signature is invalid ("No" in step S 134), the application authentication unit 917 proceeds to step S136.

If "Yes" in step S 134, the application authentication unit 917 authenticates (determines) the acquired application as the A-application (step S135).

If "No" in step S 133 or step S 134, the application authentication unit 917 authenticates (determines) the acquired application as the ordinary application (step S136).

As described above, the receiver 90 according to the exemplary embodiment of the present patent-application acquires an application stored in either the repository 80 or the application server 30 and authenticates which the acquired application is, the A-application or the ordinary application. Then, the receiver 90 regulates to prohibit the acquired application from accessing to a predetermined resource based on the authentication result. Thereby, the receiver 90 can prohibit the ordinary application whose operation is not guaranteed from performing an unlimited resource access.

Note that the present patent-application also enables to perform the application authentication when an application is activated, although the present embodiment describes the application authentication as performing the application authentication in the time of obtaining the application. In this case, an authentication order is outputted to the application authentication unit 917 ("Authentication order 2" in FIG. 7) and the application authentication is performed each time the activation controlling unit 909a activates an application, thereby safety is more improved.

Thus, since the receiver 90 may verify the signature at either timing of obtaining and activating an application, the design freedom of the receiver 90 can be improved.

In the present embodiment, a signature is described as being added on an application, but the present patent-application is not limited thereto. For example, in the present patent-application, by encrypting and decrypting an application with the signature key and the verification key respectively, the application itself can also be treated as a signature.

In the present embodiment the number of the signature key and verification key is one respectively, but the present patent-application is not limited thereto. For example, the present patent-application may allow a signature key and verification key to be issued for each service provider, or for each A-application.

In the present embodiment, the number of the service provider producing an A-application and an ordinary application is one respectively, but may be plural. In another example, the same single service provider may produce both of an ordinary application and an A-application. In yet another example, a broadcast station may produce an application as a service provider.

In the present embodiment, it is described that the A-applications are collected centrally in one repository 80 and delivered to the receiver 90, but the present patent-application is not limited thereto. For example, the integrated broadcasting communications system 1 according to the present patent-application may include multiple repositories, and each repository 80 may deliver an A-application to a receiver 90 (not shown in figure).

In addition, after a system administrator issues a signature and an application ID, then the system administrator may deliver a signature and an application ID to a service provider B, and then the service provider B may add the signature and the application ID to the application. In this case, the A-application is directly delivered to the receiver 90 from an application server (not shown in figure) managed by the service provider B.

Note that a computer may implement the control functions of the receiver 90 according to the present exemplary embodiment. In this case, the present invention may be implemented by recording on a computer-readable recording medium a resource access control program for performing the control function, by loading into the computer system the resource access control program recorded on the recording medium, and by executing the program.

Note that "computer system" here is supposed to include an OS and hardware such as a peripheral device.

The "computer-readable recording medium" is a portable medium such as a flexible disk, an optical-magnetic disk, ROM, CD-ROM, or a storage device such as a hard disk built in the computer system.

Additionally, the "computer-readable recording medium" may also include a medium which holds a program dynamically during a short time, like a network such as the Internet or a communication cable for transmitting a program via a communication line such as a telephone line; or a medium holding a program during a certain time such as a volatile memory in a computer system serving as a server or a client computer in that case.

Furthermore, the resource access control program described above may implement a part of the above-mentioned control function, or implement the function in combination with a program already recorded on the computer system.

[Description of Reference Character]

| | |
|---|---|
| 1 | Integrated broadcast communications system |
| 10 | Broadcast transmitting apparatus |
| 20, 20A, 20B | Content delivery server |
| 30 | Application server |
| 40 | Application management device |
| 50 | Application ID generating device |
| 60 | Signature key issuing device |
| 70 | Application registration device |
| 80 | Repository |
| 90 | Receiver |
| 300 | Application input unit |
| 301 | Application storing unit |
| 302 | Application transmitting unit |
| 500 | Application ID generating unit |
| 501 | Application ID output unit |

| | |
|---|---|
| 600 | Signature-key/verification-key generating unit |
| 601 | Verification key management unit |
| 602 | Signature key management unit |
| 700 | Application input unit |
| 701 | Application ID input unit |
| 702 | Application ID adding unit |
| 703 | Signature key input unit |
| 704 | Signature generating unit |
| 705 | Signature adding unit |
| 706 | Application output unit |
| 800 | Application input unit |
| 801 | Application storing unit |
| 802 | Application transmitting unit |
| 901 | Broadcast receiving unit |
| 902 | Broadcast signal analysis unit |
| 903 | Video/audio decoding unit |
| 904 | Data broadcast decoding unit |
| 905 | Communication transmitting/receiving unit |
| 906 | Application activation information obtaining unit |
| 907 | Application activation information storing unit |
| 908 | List controlling unit |
| 909 | Application management/execution controlling unit |
| 909a | Activation controlling unit |
| 909b | Termination controlling unit |
| 909c | Reservation managing unit |
| 910 | Activated application identification information storing unit |
| 911 | Application obtaining unit |
| 912 | Application storing unit |
| 913 | Application execution unit |
| 914 | Operation controlling unit |
| 915 | Composing and displaying unit |
| 916 | Security managing unit |
| 917 | Application authentication unit |
| 917 | Verification key managing unit |
| 918 | Resource access controlling unit |
| 919 | Resource managing unit |

**Claims**

1. An integrated broadcasting communications receiver for receiving a broadcast program, provided in an integrated broadcasting communications system which includes: a broadcast transmitting apparatus for transmitting the broadcast program; a signature key issuing device for issuing a signature key that is secret information and a verification key that is public information corresponding to the signature key; an application registration device for signing an application with the signature key; a repository for storing an A-application that is a signed application; and an application server for storing an ordinary application that is a non-signed application, the integrated broadcasting communications receiver comprising:

   a verification key storing unit for storing the verification key in advance;
   an application obtaining unit for obtaining the application stored in either the repository or the application server via a network;
   an application determination unit for verifying whether a signature of the application obtained by the application obtaining unit is valid or not using the verification key, and determining that the obtained application is the A-application if the signature is valid and that the obtained application is the ordinary application if the signature is invalid or not signed; and
   a resource access controlling unit for performing a resource access control to prohibit the obtained application from accessing to a predetermined resource based on a determination result by the application determination unit.

2. The integrated broadcasting communications receiver according to claim 1, wherein the application determination unit determines whether the signature of the application is valid or not when the application is obtained or activated.

3. The integrated broadcasting communications receiver according to claim 1, wherein the resource access controlling unit performs the resource access control based on a resource access controlling table that defines which resources cannot be accessed by each of the A-application and the ordinary application in advance.

4. A resource access control program to make an integrated broadcasting communications receiver that is provided with a verification key storing unit for storing a verification key in advance, function as an application obtaining unit for obtaining an application stored in either a repository or an application server via a network; an application determination unit for verifying whether a signature of the application obtained by the application obtaining unit is valid or not, using the verification key; and determining that the obtained application is an A-application if the signature is valid and that the obtained application is an ordinary application if the signature is invalid or not signed; and a resource access controlling unit for performing a resource access control to prohibit the obtained application from accessing to a predetermined resource based on a determination result by the application determination unit, wherein the integrated broadcasting communications receiver for receiving the broadcast program is provided in a integrated broadcasting communications system including: a broadcast transmitting apparatus for transmitting a broadcast program; a signature key issuing device for issuing a signature key that is secret information and the verification key that is public information corresponding to the signature key; an application registration device for signing the application with the signature key; a repository for storing the A-application that is a signed application; and an application server for storing the ordinary application that is a non-signed application.

5. The integrated broadcasting communications system comprising:

  the integrated broadcasting communications receiver according to claim 1;
  the broadcast transmitting apparatus for transmitting the broadcast program;
  the signature key issuing device for issuing the signature key and the verification key;
  the application registration device for signing the application;
  the repository for storing the A-application; and
  the application server for storing the ordinary application that is a non-signed application.

**FIG. 1**

## FIG. 2

30

| 300 | 301 | 302 |
|---|---|---|
| APP input unit | APP storing unit | APP transmitting unit |

## FIG. 3

50

| 500 | 501 |
|---|---|
| APP ID generating unit | APP ID output unit |

## FIG. 4

60

| 600 | 601 | 602 |
|---|---|---|
| Signature key/verification key generating unit | Verification key managing unit | Signature key managing unit |

FIG. 5

FIG. 6

80

| 800 | 801 | 802 |
| :---: | :---: | :---: |
| APP<br>input unit | APP<br>storing unit | APP<br>transmitting unit |

## FIG. 7

EP 2 713 295 A1

FIG. 8

| API identifier | API name | Resource type | Access right | |
|---|---|---|---|---|
| | | | A-APP | Ordinary APP |
| 1 | subA() | Video | Enabled | Disabled |
| 2 | subB() | Audio | Enabled | Disabled |
| 3 | subC() | Caption | Enabled | Disabled |
| 4 | subD() | SI | Enabled | Enabled |
| ⋮ | | | | |

# FIG. 9

Service provider B | System administrator | System administrator | System administrator | System administrator | User (viewer)

| Application management device | Signature key issuing device | Application ID generating device | Application registration device | Repository | Receiver |

40    60    50    70    80    90

Generate signature/verification key — S1

Verification key — S2

Signature key — S3

Generate APP ID — S4

APP ID — S5

APP — S6

Add APP ID to APP — S7

Generate signature with signature key — S8

Add signature to APP — S9

A-APP — S10

Request for APP — S11

A-APP — S12

APP authentication — S13

Activate A-APP — S14

EP 2 713 295 A1

# FIG. 10

Service provider A                          User (viewer)

| Application server |—30        | Receiver |—90

Request for APP S21

Ordinary APP S22

S23
| APP authentication |

S24
| Activate Ordinary APP |

FIG. 11

```
        ( APP authentication: Start )
                    │
                    ▼
        ┌──────────────────────────┐
        │ Authentication order input│──S131
        └──────────────────────────┘
                    │
                    ▼
        ┌──────────────────────────┐
        │   Retrieve ID, signature, │──S132
        │ message, and verification key│
        └──────────────────────────┘
                    │
                    ▼        S133
              ◇──────────────◇         No
        ◇  Signature added to APP?  ◇──────────────────┐
              ◇──────────────◇                         │
                    │ Yes                               │
                    ▼        S134                       │
              ◇──────────────◇         No               │
        ◇     Signature valid?      ◇──────────────────┤
              ◇──────────────◇                         │
                    │ Yes  S135                   S136  │
                    ▼                                   ▼
        ┌──────────────────────┐     ┌──────────────────────────┐
        │  Determine as A-APP  │     │ Determine as Ordinary APP │
        └──────────────────────┘     └──────────────────────────┘
                    │                           │
                    ▼◄──────────────────────────┘
        ( APP authentication: End )
```

**INTERNATIONAL SEARCH REPORT**

| International application No. |
| --- |
| PCT/JP2012/062807 |

A. CLASSIFICATION OF SUBJECT MATTER
*G06F21/20*(2006.01)i, *G06F21/24*(2006.01)i, *G09C1/00*(2006.01)i, *H04L9/32*
(2006.01)i, *H04N7/167*(2011.01)i

According to International Patent Classification (IPC) or to both national classification and IPC

B. FIELDS SEARCHED

Minimum documentation searched (classification system followed by classification symbols)
G06F21/20, G06F21/24, G09C1/00, H04L9/32, H04N7/167

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2009-65422 A (Sony Corp.), 26 March 2009 (26.03.2009), entire text; all drawings & US 2009/0070540 A1 & EP 2034727 A1 | 1-5 |
| A | WO 2010/046436 A2 (TELEFONAKTIEBOLAGET L M ERICSSON (PUBL)), 29 April 2010 (29.04.2010), entire text; all drawings & US 2010/0106977 A1 & EP 2356607 A2 & CN 102265283 A | 1-5 |
| A | WO 2011/027492 A1 (Panasonic Corp.), 10 March 2011 (10.03.2011), entire text; all drawings & US 2011/0246781 A1 | 1-5 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 June, 2012 (26.06.12) | 03 July, 2012 (03.07.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/062807 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-153809 A  (Microsoft Corp.),<br>27 May 2004 (27.05.2004),<br>entire text; all drawings<br>& US 2004/0068757 A1     & EP 1408644 A2<br>& KR 10-2004-0032073 A   & CN 1516470 A | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011112713 A